# EUROPEAN PATENT APPLICATION

(11) **EP 4 742 009 A1**
(43) Date of publication of application: **13.05.2026**
(21) Application number: 24881152.3
(22) Date of filing: 02.08.2024
(51) Int. Cl.: G06F 3/01

(54) **EYE TRACKING METHOD AND DEVICE, AND STORAGE MEDIUM**

(30) Priority: 24.10.2023 CN 202311391303
(71) Applicant: Honor Device Co., Ltd., Shenzhen, Guangdong 518040 (CN)
(72) Inventor: MENG, Yuhuang, Shenzhen, Guangdong 518040 (CN); FENG, Xiaogang, Shenzhen, Guangdong 518040 (CN); YUAN, Jiangfeng, Shenzhen, Guangdong 518040 (CN)
(74) Representative: MERH-IP Matias Erny Reichl Hoffmann Patentanwälte PartG mbB
(86) International application number: PCT/CN2024/109530
(87) International publication number: WO 2025/086781

(57) **Abstract**

This application provides an eye tracking method, a device, and a storage medium. The method is applied to an electronic device that includes a first infrared light source and a camera module. The camera module includes a receiver and an emitter that is integrated with a second infrared light source. For the electronic device of this structure, a service scenario in which the electronic device is currently located is determined, and then in a case that the electronic device is in a high-precision eye tracking scenario, two infrared light sources are controlled to emit infrared lights to a target object that includes an eye of a user, and the receiver receives infrared reflection lights of a first infrared light and a second infrared light reflected by the target object, to generate a first infrared image of the eye, so that the electronic device can perform eye tracking based on the first infrared image. Because the camera module itself has one infrared light source, high-precision eye tracking can be implemented by only adding at least one additional infrared light source. Therefore, precision of eye tracking is ensured, and a quantity of screen holes of the electronic device can be reduced.

## Description

This application claims priority to Chinese Patent Application No. 202311391303.6, filed with the China National Intellectual Property Administration on October 24, 2023 and entitled "EYE TRACKING METHOD, DEVICE, AND STORAGE MEDIUM", which is incorporated herein by reference in its entirety.

### TECHNICAL FIELD

This application relates to the field of human-computer interaction technologies, and in particular, to an eye tracking method, a device, and a storage medium.

### BACKGROUND

Eye tracking is an application technology that tracks eye movement of a human body by using technologies such as a sensor, a computer, and machine vision. This technology is widely used in fields such as virtual reality (virtual reality, VR), augmented reality (Augmented Reality, AR), medical treatment, education, intelligent driving, and psychological analysis, and is further a current research hotspot in the field of human-computer interaction.

Currently, commonly used eye tracking devices include telemetric (screen-type) and head-mounted devices. For the former type of devices, a strip-shaped collection and computing device (including a plurality of infrared light sources and infrared cameras, and the like) needs to be placed (externally placed) above or below an electronic device. For the latter type of devices, a series of hardware is integrated into glasses. Although the two types of devices can better implement an eye tracking function, the devices are usually expensive and inconvenient to carry.

In addition, if the telemetric device is integrated into an electronic device such as a mobile phone or a tablet computer, not only hardware power consumption is increased, but also a quantity of holes in a screen is increased.

### SUMMARY

To solve the foregoing technical problem, this application provides an eye tracking method, a device, and a storage medium, which aims to control different infrared light sources to operate based on an actual service scenario of an electronic device by using a camera module that is originally integrated in the electronic device and that can emit an infrared light and then adding at least one additional infrared light source, so as to obtain different infrared images, so that hardware power consumption is considered, and eye tracking with different precision can be implemented.

According to a first aspect, this application provides an eye tracking method, applied to an electronic device. The electronic device includes a first infrared light source and a camera module. The camera module includes an emitter and a receiver. The emitter includes a second infrared light source. The eye tracking method includes: determining, by the electronic device, a service scenario in which the electronic device is currently located; controlling, in a case that the electronic device is in a first service scenario, the first infrared light source to emit a first infrared light to a target object, and controlling the second infrared light source to emit a second infrared light to the target object, where the target object includes an eye of a user, and the first service scenario is a high-precision eye tracking scenario; receiving, by the receiver, a first infrared reflection light of the first infrared light reflected by the target object, and a second infrared reflection light of the second infrared light reflected by the target object, to generate a first infrared image of the eye; and performing, by the electronic device, eye tracking based on the first infrared image.

A quantity of first infrared light sources may be 1 or more than 1.

A quantity of second infrared light sources is 1.

The electronic device is a portable device such as a mobile phone or a tablet computer.

The camera module is built-in hardware of the electronic device, and the first infrared light source is an additionally added infrared light source.

In addition to the second infrared light source, the emitter in the camera module may further include a drive control unit that drives the second infrared light source to operate.

The receiver in the camera module may be considered as an image sensor, and may not only receive an infrared reflection light reflected by the target object, but also generate an infrared image of a current object in a current scenario based on the received infrared reflection light.

The high-precision eye tracking scenario is a scenario in which a requirement on precision of eye tracking is high, but a power consumption limitation is not high (an eye tracking function does not need to be used for a long time), for example, an eye tracking scenario such as determining a gazed application icon and eye tracking focusing. In this scenario, an infrared camera needs to cooperate with a plurality of infrared light sources to collect an infrared image, and then eye tracking is implemented based on a pupil center corneal reflection (Pupil Center Corneal Reflection, PCCR) method.

An operation of determining the service scenario in which the electronic device is currently located may be implemented, for example, by an application layer of the electronic device.

An operation of performing eye tracking based on the obtained first infrared image may be implemented, for example, by a processing unit in a processor of the electronic device, such as, one or more of an application processor (application processor, AP), an image signal processor (image signal processor, ISP), or a digital signal processor (digital signal processor, DSP).

Therefore, for an electronic device having a camera module that itself has one infrared light source, one or more additional infrared light sources (first infrared light source) are added. After the eye tracking function is enabled on the electronic device of this structure, the service scenario in which the electronic device is currently located is determined, so as to control both the infrared light source built in the camera module and the newly-added infrared light source to emit infrared lights to the target object in a case that the electronic device is in a high-precision eye tracking scenario, and the receiver receives the infrared reflection light reflected by the target object to generate the first infrared image of the eye, so that the electronic device can analyze and process the first infrared image based on PCCR, so as to implement eye tracking. Because the camera module itself has one infrared light source, high-precision eye tracking can be implemented by only adding at least one additional infrared light source. Therefore, precision of eye tracking is ensured, and a quantity of screen holes of the electronic device can be reduced.

According to the first aspect, the receiving, by the receiver, a first infrared reflection light of the first infrared light reflected by the target object, and a second infrared reflection light of the second infrared light reflected by the target object, to generate a first infrared image of the eye includes: receiving, by the receiver, the first infrared reflection light of the first infrared light reflected by a cornea and a retina of the eye, and the second infrared reflection light of the second infrared light reflected by the cornea and the retina; where the cornea reflects the first infrared reflection light and the second infrared reflection light, a position of a formed corneal glint remains constant, and the light reflected on the retina identifies a pupil orientation of the eye.

According to the first aspect or any implementation of the first aspect, the performing, by the electronic device, eye tracking based on the first infrared image includes: determining, by the electronic device by using a pupil center corneal reflection method, a moving direction of the eye based on a vector between a pupil center and the corneal glint formed by the first infrared reflection light and the second infrared reflection light in the first infrared image at the cornea.

According to the first aspect or any implementation of the first aspect, the determining, by the electronic device by using a pupil center corneal reflection method, a moving direction of the eye based on a vector between a pupil center and the corneal glint formed by the first infrared reflection light and the second infrared reflection light in the first infrared image at the cornea includes: correcting, by the electronic device, a head posture of the user based on 3D depth information provided by the camera module; and determining, by the electronic device by using the pupil center corneal reflection method, the moving direction of the eye based on the vector between the pupil center and the corneal glint formed by the first infrared reflection light and the second infrared reflection light in the first infrared image at the cornea.

It may be understood that in addition to obtaining the infrared image, the camera module having the second infrared light source, such as a TOF module or a structured light module, may further provide a 3D depth image. Therefore, the 3D depth information provided by the camera module is fused, so that generalization of a pose can be improved, and an eye tracking result of the infrared image corrected based on the 3D depth information is more accurate.

According to the first aspect or any implementation of the first aspect, the method further includes: in a case that the electronic device is in a second service scenario, controlling the second infrared light source to emit the second infrared light to the target object, where the second service scenario is a low-precision eye tracking scenario; receiving, by the receiver, a third infrared reflection light of the second infrared light reflected by the target object, to generate a second infrared image of the eye; and performing, by the electronic device, eye tracking based on the second infrared image.

The low-precision eye tracking scenario is a scenario in which a requirement on precision of eye tracking is low, but a power consumption limitation is high (an eye tracking function needs to be used for a long time), for example, an eye tracking scenario such as eye-controlled page-turning/sliding when reading e-books and watching short videos. In this scenario, no additional infrared light source needs to be used, and only the infrared light source built in the emitter in the camera module is used to emit illumination. Subsequently, the infrared image is analyzed and processed based on an appearance-based artificial intelligence (Artificial Intelligence, AI) eye tracking technology, so that eye tracking can be implemented.

Therefore, in the low-precision eye tracking scenario, no additional first infrared light source needs to be used, only the second infrared light source built in the emitter in the camera module is used to emit illumination, and then the obtained infrared image is analyzed and processed based on an appearance-based AI eye tracking technology, so that eye tracking can be implemented, and hardware power consumption of the electronic device can be ensured.

According to the first aspect or any implementation of the first aspect, the receiving, by the receiver, a third infrared reflection light of the second infrared light reflected by the target object, to generate a second infrared image of the eye includes: receiving, by the receiver, a third infrared reflection light of the second infrared light reflected by a face of the user; and generating the second infrared image based on the third infrared reflection light.

According to the first aspect or any implementation of the first aspect, the performing, by the electronic device, eye tracking based on the second infrared image includes: determining, by the electronic device, a key point of an area in which the eye is located in the second infrared image; capturing, by the electronic device, an image area including the key from the second infrared image, to obtain an infrared image of the eye; and determining, by the electronic device by using an appearance-based artificial intelligence eye tracking technology, a moving direction of the eye based on an appearance of the face and the eye of the user in the second infrared image and a position of a gaze point of the eye in the infrared image of the eye.

According to the first aspect or any implementation of the first aspect, the first infrared light source and the camera module are disposed below a screen of the electronic device. The controlling, in a case that the electronic device is in a first service scenario, the first infrared light source to emit a first infrared light to a target object, and controlling the second infrared light source to emit a second infrared light to the target object include: controlling, in the case that the electronic device is in the first service scenario, the first infrared light source to emit the first infrared light to the target object at a first intensity, and controlling the second infrared light source to emit the second infrared light to the target object at the first intensity; where the first intensity is higher than a second intensity, and the second intensity is a luminous intensity of the first infrared light source and the second infrared light source when the first infrared light source and the camera module are disposed in a through hole provided in the screen.

In this way, the camera module and the first infrared light source are hidden below the screen. Therefore, no hole needs to be provided in the screen, and positions of the camera module and the first infrared light source are reserved, so that the electronic device can achieve a higher screen-to-body ratio.

In addition, because the camera module and the first infrared light source are disposed below the screen, when the first infrared light source and the second infrared light source need to emit illumination, the first infrared light source and the second infrared light source are disposed to operate at a higher luminous intensity, so that it can be ensured that the obtained infrared image can include effective information required for eye tracking.

According to the first aspect or any implementation of the first aspect, a through hole is provided in a screen of the electronic device, and the first infrared light source and the camera module are disposed in the through hole. The controlling, in a case that the electronic device is in a first service scenario, the first infrared light source to emit a first infrared light to a target object, and controlling the second infrared light source to emit a second infrared light to the target object includes: controlling, in the case that the electronic device is in the first service scenario, the first infrared light source to emit the first infrared light to the target object at a second intensity, and controlling the second infrared light source to emit the second infrared light to the target object at the second intensity; where the second intensity is lower than a first intensity, and the first intensity is a luminous intensity of the first infrared light source and the second infrared light source when the first infrared light source and the camera module are disposed below the screen.

In this way, the through hole is provided in the screen of the electronic device, and the camera module and the first infrared light source are disposed in the through hole, so that the first infrared light source and the second infrared light source operate at a luminous intensity lower than the first intensity, so that it can be ensured that the obtained infrared image can include effective information required for eye tracking, thereby reducing hardware power consumption of the electronic device.

According to the first aspect or any implementation of the first aspect, there is at least one first infrared light source.

In this way, the electronic device can operate in the high-precision eye tracking scenario, and implementation costs can be considered. In addition, a quantity of holes in the screen of the electronic device is reduced as much as possible, and hardware power consumption is reduced.

According to the first aspect or any implementation of the first aspect, a spacing between each first infrared light source and the second infrared light source is greater than or equal to 1 cm, and a distance between any two first infrared light sources is greater than or equal to 1 cm.

Therefore, it is ensured that the infrared image can include effective information required for eye tracking, so that the eye tracking result is more accurate.

According to a second aspect, this application provides an electronic device. The electronic device includes a memory, a processor, a first infrared light source, and a camera module. The camera module includes an emitter and a receiver, and the emitter includes a second infrared light source. The processor is separately coupled to the memory, the first infrared light source, and the camera module. The memory stores program instructions, and when the program instructions are executed by the processor, the electronic device is enabled to execute instructions for the method according to the first aspect or any possible implementation of the first aspect.

According to the second aspect, the camera module is a time of flight (Time of Flight, TOF) module, or a structured light module.

According to the second aspect or any implementation of the second aspect, the first infrared light source and the camera module are disposed below a screen of the electronic device.

According to the second aspect or any implementation of the second aspect, a through hole is provided in the screen of the electronic device, and the first infrared light source and the camera module are disposed in the through hole.

According to the second aspect or any implementation of the second aspect, there is at least one first infrared light source.

According to the second aspect or any implementation of the second aspect, a spacing between each first infrared light source and the second infrared light source is greater than or equal to 1 cm, and a distance between any two first infrared light sources is greater than or equal to 1 cm.

The second aspect and any implementation of the second aspect respectively correspond to the first aspect and any implementation of the first aspect. For technical effects corresponding to the second aspect and the any implementation of the second aspect, refer to technical effects corresponding to the first aspect and any implementation of the first aspect. Details are not described herein again.

According to a third aspect, this application provides a computer-readable storage medium, including a computer program. When the computer program is run on an electronic device, the electronic device is enabled to execute instructions for the method according to the first aspect or any possible implementation of the first aspect.

The third aspect and any implementation of the third aspect respectively correspond to the first aspect and any implementation of the first aspect. For technical effects corresponding to the third aspect and any implementation of the third aspect, refer to technical effects corresponding to the first aspect and any implementation of the first aspect. Details are not described herein again.

According to a fourth aspect, this application provides a computer program, and the computer program includes instructions for performing the method in the first aspect or any possible implementation of the first aspect.

The fourth aspect and any implementation of the fourth aspect respectively correspond to the first aspect and any implementation of the first aspect. For technical effects corresponding to the fourth aspect and any implementation of the fourth aspect, refer to technical effects corresponding to the first aspect and any implementation of the first aspect. Details are not described herein again.

### BRIEF DESCRIPTION OF DRAWINGS

FIG. 1A is an example schematic structural diagram of a telemetric eye tracking device;
FIG. 1B is an example schematic diagram of a bright-pupil tracking effect;
FIG. 1C is an example schematic diagram of a dark-pupil tracking effect;
FIG. 1D is an example schematic diagram of a scenario in which the telemetric eye tracking device shown based on FIG. 1A performs eye tracking;
FIG. 2 is an example schematic diagram of a hardware structure of an electronic device;
FIG. 3A is an example schematic diagram of a relationship between a camera module and a first infrared light source in an electronic device;
FIG. 3B is an example schematic diagram of set positions of a camera module and a first infrared light source;
FIG. 4 is an example schematic diagram of a software structure of an electronic device;
FIG. 5A(1), FIG. 5A(2), FIG. 5B(1), and FIG. 5B(2) are example schematic diagrams of a user interface for enabling an eye tracking function from a settings entry;
FIG. 5C(1) and FIG. 5C(2) are an example schematic diagram of a user interface for enabling an eye tracking function from a drop-down notification bar;
FIG. 6 is an example schematic flowchart of an eye tracking method according to an embodiment of this application;
FIG. 7A and FIG. 7B are example schematic diagrams of a user interface in a high-precision eye tracking scenario; and
FIG. 7C is an example schematic diagram of a user interface in a low-precision eye tracking scenario.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. Based on the embodiments of this application, all other embodiments obtained by a person of ordinary skill in the art without creative efforts fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of the target objects.

In the embodiments of this application, words such as "example" or "for example" are used to represent giving an example, an illustration, or a description. Any embodiment or design solution described as an "example" or "for example" in embodiments of this application should not be explained as being more preferred or having more advantages than other embodiments or design solutions. Exactly, use of the words such as "example" or "for example" is intended to present a related concept in a specific manner.

In the description of the embodiments of this application, unless otherwise stated, "a plurality of" means two or more. For example, a plurality of processing units refer to two or more processing units, and a plurality of systems refer to two or more systems.

Currently, manufacturers of electronic devices such as mobile phones, tablet computers, personal computers (Personal Computer, PC), and smart screens gradually have integrated an eye tracking function into these electronic devices, so that a user can perform human-computer interaction with the electronic devices better, thereby improving user experience, and then preempting more user markets.

For example, in some possible implementations, a model may be constructed by using face images that are collected by using a big data platform and that include eye images in various scenarios based on an appearance-based AI eye tracking technology (subsequently described as an appearance-based AI method), and an image that is shot by a camera module and that includes an eye is analyzed and processed based on the constructed model, so as to implement eye tracking.

It should be noted that, when eye tracking is implemented based on the appearance-based AI method, only the camera module in the electronic device needs to be used, so that hardware is simple, and power consumption is low.

However, eye tracking implemented based on the appearance-based AI method has low precision, and it is difficult to meet a requirement of a high-precision eye tracking scenario. Therefore, in some other possible implementations, eye tracking may be implemented by using an eye tracking device.

Currently, commonly used eye tracking devices include telemetric (screen-type) and head-mounted devices.

For example, a common glass type eye tracker is a head-mounted eye tracking device. Using the glass type eye tracker as an example, this type of eye tracking devices may generally integrate a series of hardware, for example, a plurality of infrared illumination light sources and one (or more) infrared cameras, into glasses.

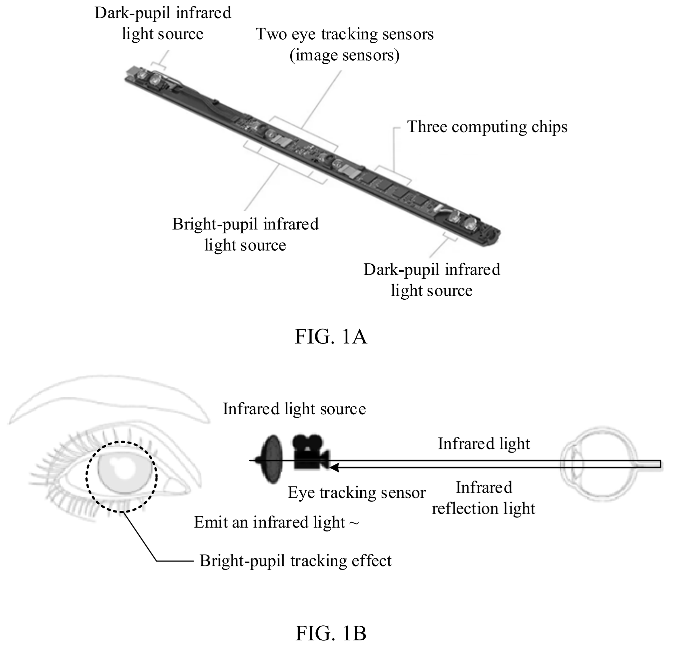

The telemetric eye tracking device is generally of a strip-shaped structure. A hardware structure of the telemetric eye tracking device may be shown in FIG. 1A. Referring to FIG. 1A, for example, the telemetric eye tracking device may include two dark-pupil infrared light sources, one (or more) bright-pupil infrared light sources, two eye tracking sensors (that is, image sensors, which may also be understood as receivers in the camera module), and three computing chips.

It should be noted that, for the computing chip in the telemetric eye tracking device, an eye tracking algorithm used by the telemetric eye tracking device may be specifically a pupil center corneal reflection method (hereinafter referred to as a PCCR method).

In addition, the bright-pupil infrared light source described in this embodiment may be understood as an infrared light source on one straight line with a visual axis, as shown in FIG. 1B. Because the infrared light source and the visual axis are on one straight line, after an infrared light emitted by the infrared light source is irradiated on an eye of the user, a retina may reflect the light (the infrared light emitted by the infrared light source and the reflected infrared reflection light are on one straight line shown in FIG. 1B). A pupil is bright and an iris is dark, which may form a bright-pupil tracking effect, as shown in FIG. 1B. Therefore, an infrared light source located in a middle area in FIG. 1A, that is, close to an eye tracking sensor, is referred to as a bright-pupil infrared light source.

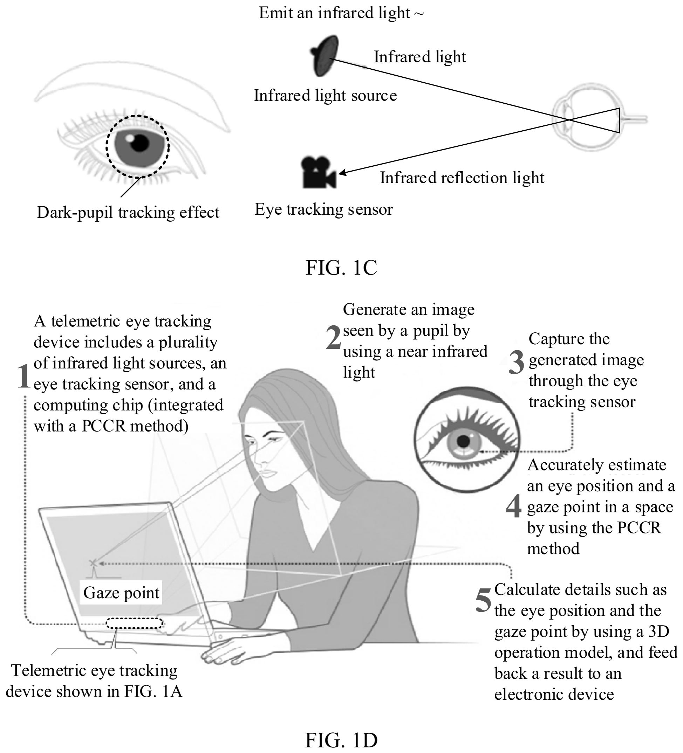

In addition, the dark-pupil infrared light source described in this embodiment may be understood as an infrared light source not on one straight line with a visual axis, as shown in FIG. 1C. Because the infrared light source and the visual axis are not on one straight line, after the infrared light emitted by the infrared light source is irradiated on the eye of the user, the pupil is dark and the iris is bright, which may form a dark-pupil tracking effect, as shown in FIG. 1C. Therefore, an infrared light source located at two ends in FIG. 1A, that is, far away from the eye tracking sensor, is referred to as a dark-pupil infrared light source.

For use of the telemetric eye tracking device of a strip-shaped structure shown in FIG. 1A, the telemetric eye tracking device generally needs to be placed (externally placed) above or below the electronic device, so that eye tracking can be implemented by using the external telemetric eye tracking device in a process of using the electronic device by the user.

Use of the telemetric eye tracking device of the strip-shaped structure shown in FIG. 1A may be shown in FIG. 1D. Referring to FIG. 1D, for example, an example in which the electronic device is a notebook computer is used. In some possible implementations, the telemetric eye tracking device may be placed below a screen of the notebook computer. In this way, when the user gazes a gaze point on the screen of the notebook computer, the dark-pupil infrared light source and the bright-pupil infrared light source that are in the telemetric eye tracking device emit illumination, so that the eye tracking sensor (infrared camera) in the telemetric eye tracking device captures information related to the eye to generate an infrared image. Correspondingly, the computing chip in the telemetric eye tracking device may analyze and process the infrared image captured and generated by the eye tracking sensor by using the PCCR method, so as to accurately estimate an eye position in the space and the gaze point. Finally, the computing chip calculates details such as the eye position and the gaze point by using a 3D operation model, and may feed back an eye tracking result to the electronic device, so that the electronic device implements human-computer interaction in response to an instruction corresponding to the eye tracking result.

It should be understood that the foregoing description is merely an example listed to better understand the technical solution of this embodiment, and is not used as a unique limitation on this embodiment.

Because both the telemetric eye tracking device and the head-mounted eye tracking device analyze and process the collected infrared image based on the PCCR method, the two devices can better implement the eye tracking function, but are usually expensive and inconvenient to carry. In addition, because there are a plurality of infrared light sources, hardware power consumption is large.

In addition, if the telemetric device is integrated into an electronic device such as a mobile phone, a tablet computer, a PC, and a smart screen, not only hardware power consumption is increased, but also a quantity of holes in the screen is increased, thereby affecting a screen-to-body ratio.

In view of this, embodiments of this application provide an eye tracking solution, which aims to control different infrared light sources to operate based on an actual service scenario of an electronic device by using a camera module that is originally integrated in the electronic device and that can emit an infrared light and then adding at least one additional infrared light source, and further use different eye tracking methods such as the PCCR method or the appearance-based AI method, so that hardware power consumption is considered, and eye tracking with different precision can be implemented.

The following describes, in detail by using specific embodiments, the technical solutions of this application and how the foregoing technical problems are resolved by using the technical solutions of this application.

Before the eye tracking solution provided in embodiments of this application is specifically described, a hardware structure of an electronic device applicable to this solution is first described.

The electronic device may be, for example, a mobile phone, a tablet computer, an intelligent wearable device, a PC, or a smart screen, and examples are not listed one by one herein. This is not limited in this application. The following uses an example in which the electronic device is a mobile phone for description.

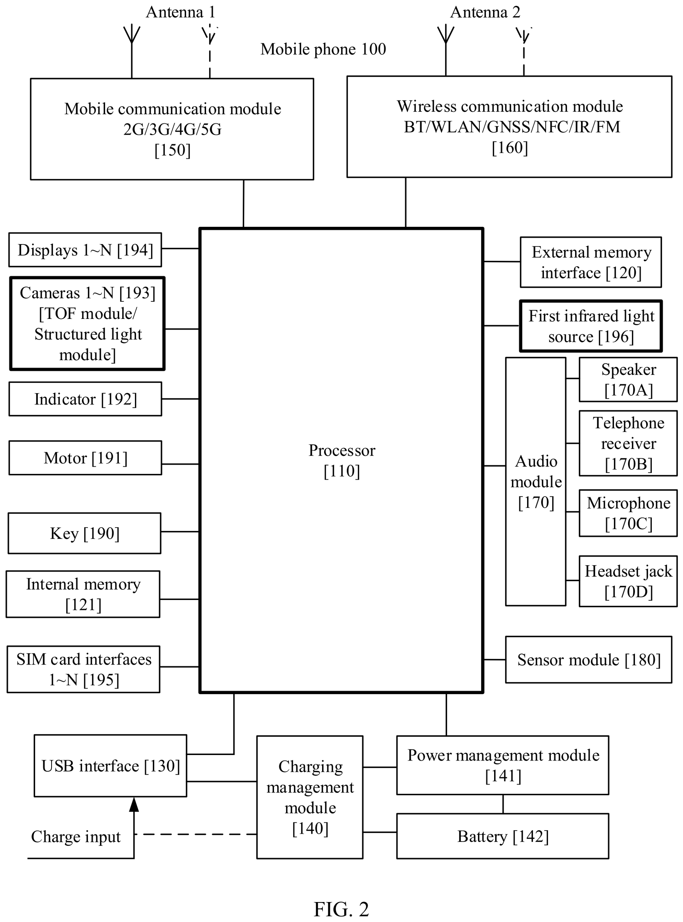

Referring to FIG. 2, a mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a key 190, a motor 191, an indicator 192, a camera 193, a display 194, a subscriber identity module (subscriber identification module, SIM) card interface 195, a first infrared light source 196, and the like.

The processor 110 may include one or more processing units. For example, the processor 110 may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and the like, which are not listed one by one herein. This is not limited in this application.

Specifically, in the eye tracking solution provided in embodiments of this application, an image that is collected by the camera 193 and that is of a target object (including an eye of a user) may be emitted to the processing unit in the processor 110. The processing unit analyzes and processes the obtained image based on a corresponding method such as a PCCR method or an appearance-based AI method, so as to implement eye tracking.

The processing unit for analyzing and processing the obtained image based on the PCCR method or the appearance-based AI method so as to implement eye tracking, for example, may be any one or more of an AP, a GPU, an ISP, or a DSP. This is not limited in this application.

In this embodiment, that data fed back by the camera 193 is processed by the ISP is used as an example. In an eye tracking scenario, when an infrared light is irradiated on the target object, for example, an infrared reflection light of the eye of the user is emitted to a camera photosensitive element by using a lens, an optical signal is converted into an electrical signal, and the camera photosensitive element emits the electrical signal to the ISP for processing, so as to convert the electrical signal into an image visible to a naked eye. The ISP may further perform algorithm optimization on noise, brightness, and complexion of the image. The ISP may further optimize parameters such as exposure and a color temperature of a shooting scenario. In some implementations, the ISP may be disposed in the camera 193.

It should be noted that the camera photosensitive element in this embodiment may be considered as the eye tracking sensor (image sensor) in FIG. 1A.

It should be understood that the foregoing description is merely an example listed to better understand the technical solution of this embodiment, and is not used as a unique limitation on this embodiment.

In addition, the processor 110 may further include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like, which are not listed one by one herein. This is not limited in this application.

In addition, a memory may be further disposed in the processor 110 to store instructions and data. In some implementations, the memory in the processor 110 is a cache memory. The memory may store instructions or data recently used or cyclically used by the processor 110. If the processor 110 needs to use the instructions or the data again, the processor may directly invoke the instructions or the data from the memory. Repeated access is avoided, and waiting time of the processor 110 is reduced, thereby improving system efficiency.

Still referring to FIG. 2, the external memory interface 120 may be configured to connect to an external memory card such as a Micro SD card, to extend a storage capability of the mobile phone 100. The external memory card communicates with the processor 110 through the external memory interface 120, to implement a data storage function. For example, files such as music and videos are stored in the external memory card.

Still referring to FIG. 2, the internal memory 121 may be configured to store computer-executable program code, and the executable program code includes instructions. The processor 110 runs the instructions stored in the internal memory 121, to perform various function applications and data processing of the mobile phone 100. The internal memory 121 may include a program storage area and a data storage area. The program storage area may store an operating system, an application required by at least one function (for example, a sound playback function, an image playback function, and the eye tracking function mentioned in embodiments of this application), and the like. The data storage area may store data and the like created when the mobile phone 100 is in use. In addition, the internal memory 121 may include a high-speed random access memory, and may further include a nonvolatile memory, for example, at least one magnetic disk storage device, a flash memory device, or a universal flash storage (universal flash storage, UFS).

Still referring to FIG. 2, the charging management module 140 is configured to receive a charge input from a charger. When charging the battery 142, the charging management module 140 may further supply power to the electronic device through the power management module 141.

Still referring to FIG. 2, the power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the first infrared light source, the wireless communication module 160, and the like. The power management module 141 may be further configured to monitor parameters such as a battery capacity, a quantity of battery cycles, and a battery health status (leakage or impedance).

Still referring to FIG. 2, a wireless communication function of the mobile phone 100 may be implemented through the antenna 1, the antenna 2, the mobile communication module 150, the wireless communication module 160, the modem processor, the baseband processor, and the like.

Still referring to FIG. 2, the mobile communication module 150 may provide a solution for wireless communication that is applied to the mobile phone 100 and that includes 2G/3G/4G/5G and the like. The wireless communication module 160 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

Still referring to FIG. 2, the audio module 170 may include a speaker 170A, a telephone receiver 170B, a microphone 170C, a headset jack 170D, and the like. For example, the mobile phone 100 may implement an audio function such as a sound recording or video recording function by using the application processor, and the speaker 170A, the telephone receiver 170B, the microphone 170C, the headset jack 170D, and the like in the audio module 170.

Still referring to FIG. 2, the sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like, which are not listed one by one herein. This is not limited in this application.

Still referring to FIG. 2, the key 190 includes a power-on key, a volume key, and the like. The key 190 may be a mechanical key, or may be a touch key. The mobile phone 100 may receive a key input, and generate a signal input related to user setting and function control of the mobile phone 100. The motor 191 may generate a vibration prompt. The motor 191 may be configured to provide a vibration prompt for an incoming call, and may also be configured to provide vibration feedback for a touch. The indicator 192 may be an indicator light, may be configured to indicate a charging status or a power change, and may be further configured to indicate a message, a missed incoming call, a notification, and the like.

Still referring to FIG. 2, the display 194 is configured to display an image, a video, and the like. The display 194 includes a display panel. In some implementations, the mobile phone 100 may include one or N displays 194, where N is a positive integer greater than 1. The mobile phone 100 may implement a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

Still referring to FIG. 2, the camera 193 is configured to capture a still image or a video. The mobile phone 100 may implement a shooting function by using the ISP, the camera 193, the video codec, the GPU, the display 194, the application processor, and the like. In some implementations, the mobile phone 100 may include one or N cameras 193, where N is a positive integer greater than 1.

In addition, it should be noted that, specifically, in the eye tracking solution provided in embodiments of this application, the camera of the electronic device is a camera that includes a built-in infrared light source.

For example, in a possible implementation, the camera that includes a built-in infrared light source may be, for example, a TOF module. In some other possible implementations, the camera module that includes a built-in infrared light source may be, for example, a structured light module.

Therefore, the camera 193 that includes a built-in infrared light source operates together with the additionally added first infrared light source 196, so that eye tracking can be implemented by using the PCCR method. The camera 193 that includes a built-in infrared light source operates separately, so that eye tracking can be implemented by using the appearance-based AI method. In this way, based on different eye tracking scenarios, the first infrared light source 196 and the infrared light source (hereinafter described as a second infrared light source) in the camera 193 may be properly controlled to operate together, or the second infrared light source is controlled to operate separately. Therefore, a precision requirement of eye tracking can be considered, and a hardware power consumption requirement can be considered.

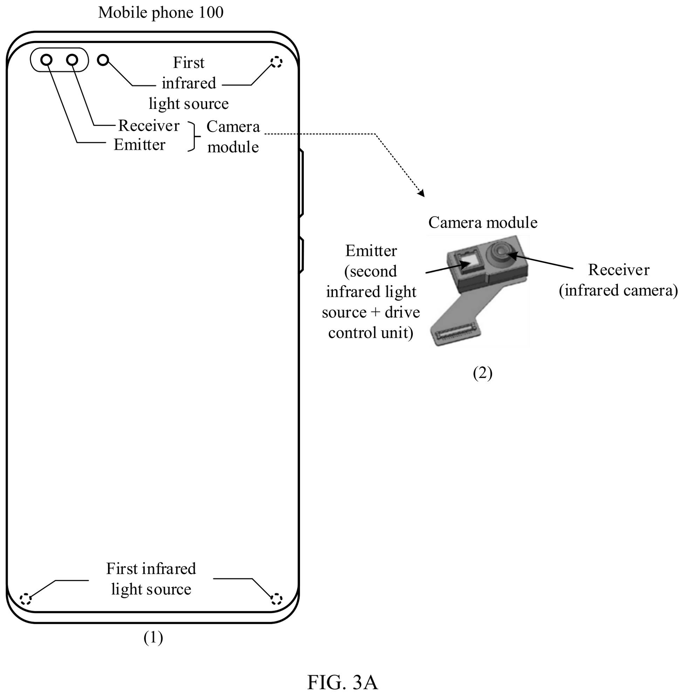

A positional relationship between the camera 193 and the first infrared light source may be shown in (1) of FIG. 3A. Referring to (1) of FIG. 3A, for example, in a case that the camera module is located in an upper left corner of a screen of the mobile phone 100, the first infrared light source may be located at a different position shown in (1) of FIG. 3A.

It should be noted that, to ensure hardware power consumption, in some possible implementations, there may be one first infrared light source. In this case, the first infrared light source may be at any position at which the first infrared light source is disposed shown in (1) of FIG. 3A.

For example, in some other possible implementations, for example, the mobile phone 100 with a high precision requirement may be additionally provided with a plurality of first infrared light sources. For example, one first infrared light source is separately disposed at four positions shown in (1) of FIG. 3A.

It should be understood that the foregoing description is merely an example listed to better understand the technical solution of this embodiment, and is not used as a unique limitation on this embodiment. In actual application, the camera module and the first infrared light source may be disposed based on a service requirement. To ensure an eye tracking effect, a spacing between any two first infrared light sources and a spacing between any infrared light source and the second infrared light source may be set to meet a specified distance (for example, greater than or equal to 1 cm), so that it is ensured that captured image information can completely include feature information required for eye tracking.

Still referring to (1) of FIG. 3A, for example, the camera (the camera module) that includes a built-in infrared light source may include an emitter and a receiver. A hardware structure of the camera module of this type may be shown in (2) of FIG. 3A.

Referring to (2) of FIG. 3A, for example, the emitter part of the camera module may include an infrared light source, that is, the foregoing second infrared light source, and a drive control unit configured to control the second infrared light source to operate. The receiver part of the camera module may be considered as an infrared camera, or an eye tracking sensor, or an image sensor.

It should be understood that the foregoing description is merely an example listed to better understand the technical solution of this embodiment, and is not used as a unique limitation on this embodiment. In actual application, the camera module may include more components than the components shown in (2) of FIG. 3A, which is not limited in this application.

Still referring to (1) of FIG. 3A, for example, the camera module and the first infrared light source may be disposed in a through hole provided in the screen of the mobile phone 100. For this setting manner, in a possible implementation, a long through hole may be provided in the screen, and both the camera module and the first infrared light source are disposed in a same through hole.

It may be understood that a spacing between any two first infrared light sources and a spacing between any infrared light source and the second infrared light source need to meet a specified distance, for example, not less than 1 cm. Therefore, the through hole provided in the screen occupies a larger area, which affects a screen-to-body ratio of the mobile phone 100.

For example, in another possible implementation, a plurality of through holes may be provided in the screen, and the camera module and the first infrared light source are respectively disposed in different through holes. Although this manner may reduce a size of each through hole, a quantity of holes in the screen is increased. Therefore, the screen-to-body ratio of the mobile phone 100 is also affected.

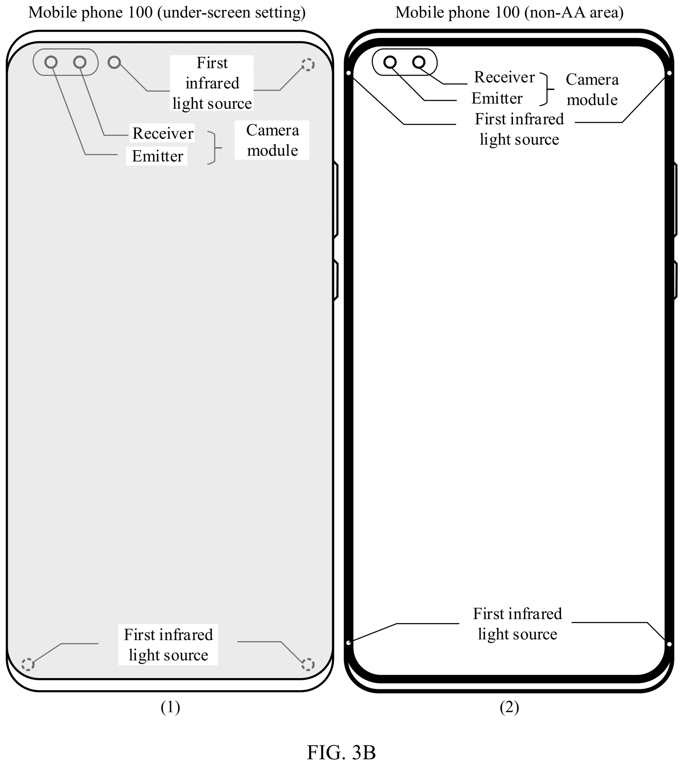

In view of this, in a possible implementation, the camera module and the first infrared light source may be disposed below the screen of the mobile phone 100, that is, no through hole is provided in the screen, as shown in (1) of FIG. 3B. In this way, the quantity of screen holes can be reduced, and the screen-to-body ratio of the screen can be increased.

In addition, it should be noted that, in some possible implementations, one component of the camera module and the first infrared light source may be disposed below the screen, and the other component is disposed in the provided through hole. In this way, the quantity of screen holes can be reduced, and the screen-to-body ratio of the screen can be increased.

It should be understood that the foregoing description is merely an example listed to better understand the technical solution of this embodiment, and is not used as a unique limitation on this embodiment.

Referring to (2) of FIG. 3B, for example, in some other possible implementations, the camera module may be normally disposed in the through hole provided in the screen, and the additionally added first infrared light source is disposed in non-AA of the screen or an accessory of the mobile phone 100.

It may be understood that the screen of the electronic device may be generally divided into a view area (View Area, VA), an active area (Active Area, AA, also referred to as a valid area), and a black matrix (Black Matrix, BM) area. The VA is all visible parts on the screen, the AA is a part that can be programmed to control display, and the BM area is a peripheral part of the VA (usually referred to as a black side part of the screen).

In addition, it may be further understood that the screen-to-body ratio is usually for the AA. Therefore, in some possible implementations, to increase the screen-to-body ratio, the first infrared light source may be disposed in non-AA, that is, on the VA or the BM, as shown in (2) of FIG. 3B.

In addition, it should be noted that, for a scenario in which the first infrared light source and the second infrared light source are disposed below the screen, infrared lights emitted by the first infrared light source and the second infrared light source may have an impact on light emittance, reflection, refraction, and the like due to a material quality, a thickness, and the like of the screen. Therefore, to ensure that the finally obtained infrared image can completely include the feature information required for eye tracking, the first infrared light source and the second infrared light source may be disposed to operate at a high luminous intensity (subsequently expressed by a first intensity), so that it can be ensured that the obtained infrared image can include effective information required for eye tracking.

In addition, it should be further noted that, for a scenario in which the first infrared light source and the second infrared light source are disposed in the through hole provided in the screen, or on non-AA, or on the accessory of the mobile phone 100, the first infrared light source and the second infrared light source may be disposed to operate at a luminous intensity lower than the first intensity (subsequently expressed by a second intensity), so that it can be ensured that the obtained infrared image can include effective information required for eye tracking, and hardware power consumption can be reduced.

It should be understood that the foregoing description is merely an example listed to better understand the technical solution of this embodiment, and is not used as a unique limitation on this embodiment. In actual application, the additionally added infrared light source, such as the first infrared light source, may be placed below the screen or on the screen together with the camera module. Alternatively, one is disposed on the screen, and the other is disposed below the screen. This is not limited in this application. It should be understood that, to ensure the eye tracking effect, a luminous intensity of an infrared light source placed below the screen needs to be higher than a luminous intensity of an infrared light source placed on the screen.

Introduction to the hardware structure of the mobile phone 100 ends here. It should be understood that the mobile phone 100 shown in FIG. 2 is merely an example. During a specific implementation, the mobile phone 100 may have more or fewer components than those shown in the figure, may combine two or more components, or may have a different component configuration. Various components shown in FIG. 2 may be implemented in hardware including one or more signal processing circuits and/or application-specific integrated circuits, software, or a combination of hardware and software.

To better understand a software structure of the mobile phone 100 shown in FIG. 2, the following describes the software structure of the mobile phone 100. Before the software structure of the mobile phone 100 is described, an architecture that may be used by the software system of the mobile phone 100 is first described.

Specifically, in actual application, the software system of the mobile phone 100 may use a layered architecture, an event-driven architecture, a microkernel architecture, a microservice architecture, or a cloud architecture.

In addition, it may be understood that a software system currently used by a mainstream electronic device includes but is not limited to a Windows system, an Android system, and an iOS system. For ease of description, in the embodiments of this application, the Android system of the layered architecture is used as an example to describe the software structure of the mobile phone 100.

In addition, subsequently, the eye tracking solution provided in embodiments of this application is also applicable to another system during specific implementation.

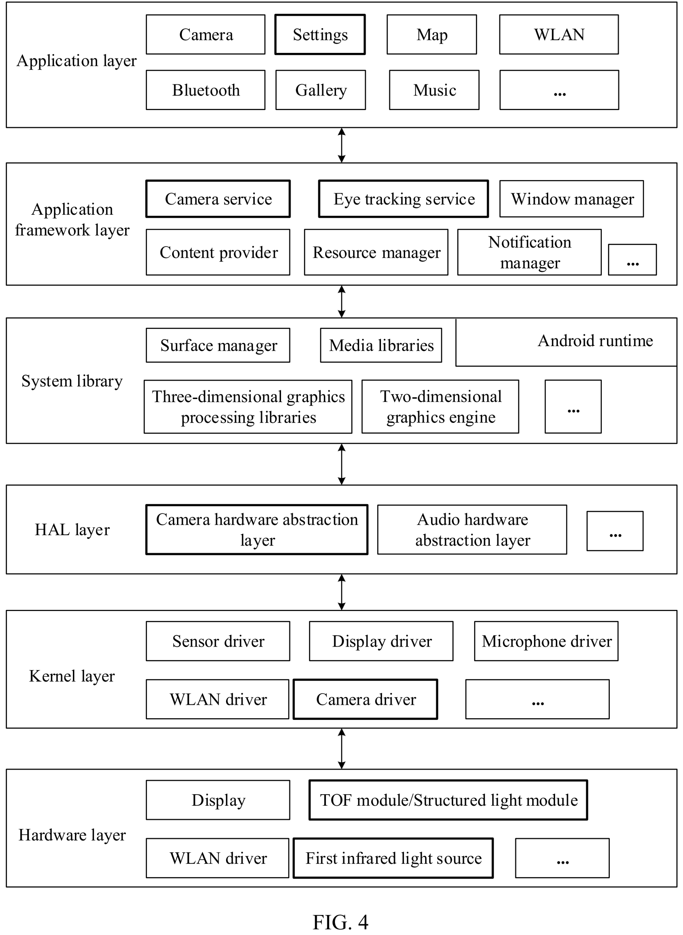

FIG. 4 is a block diagram of a software structure of a mobile phone 100 according to the embodiments of this application.

As shown in FIG. 4, in the layered architecture of the mobile phone 100, software is divided into several layers, and each layer has a clear role and task. Layers communicate with each other through a software interface. In some implementations, an Android system is divided into five layers: an application layer, an application framework layer, an Android runtime (Android runtime) and system library, a hardware abstraction layer (HAL layer), and a kernel layer from top to bottom.

The application layer may include a series of application packages. As shown in FIG. 4, the application package may include applications such as camera, settings, map, WLAN, Bluetooth, gallery, and music, which are not listed one by one herein. This is not limited in this application.

It should be noted that, to enable the mobile phone 100 to implement eye tracking, to perform human-computer interaction with the user, the user needs to enable the eye tracking function in advance. In this way, when the mobile phone 100 is in an eye tracking scenario subsequently, for example, when the screen is on, or when a notification message is received on a lock screen interface, the user does not need to manually perform an operation, and the first infrared light source and the second infrared light source are directly controlled based on a current service scenario to operate together, or the second infrared light source operates separately. Further, an eye tracking module analyzes and processes the collected infrared image based on a method corresponding to the current service scenario, such as the PCCR method or the appearance-based AI method.

For example, in some possible implementations, an enabling entry of the eye tracking function may be disposed, for example, in a settings application at the application layer.

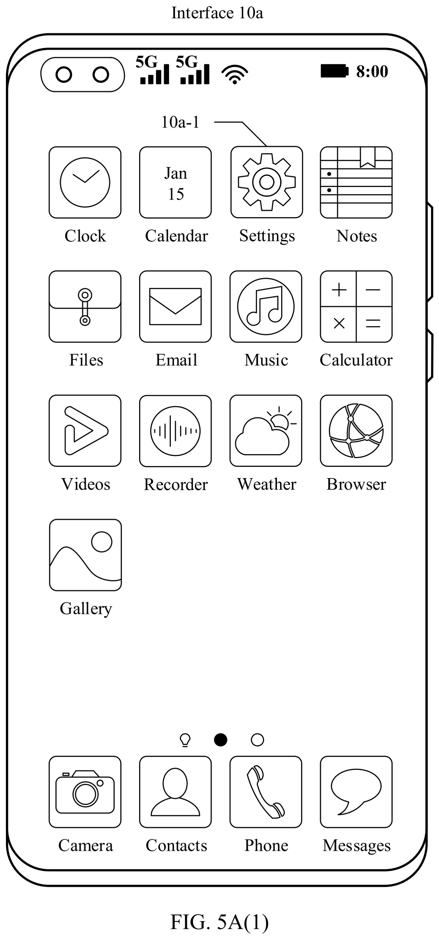

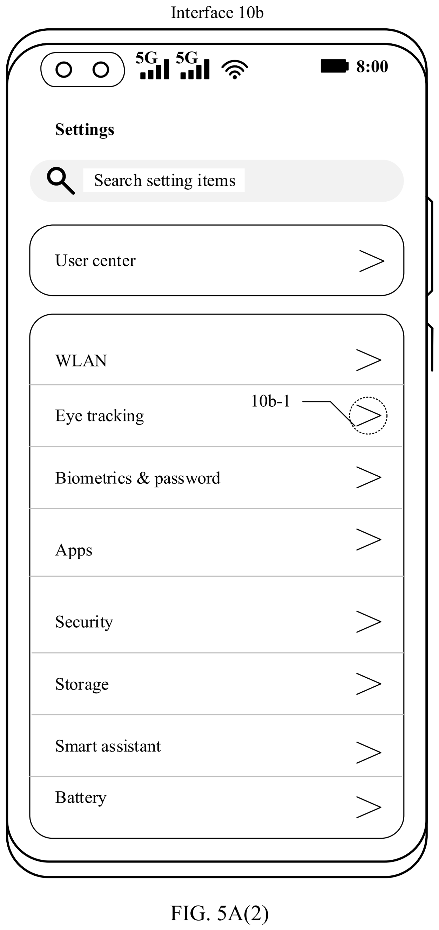

For example, in a manner in which the eye tracking function is enabled by using the settings application, the user may tap an icon of the settings application in an interface 10a shown in FIG. 5A(1), so that the mobile phone 100 starts the settings application in response to the operation behavior, and further switches a user interface from the interface 10a to an interface 10b shown in FIG. 5A(2).

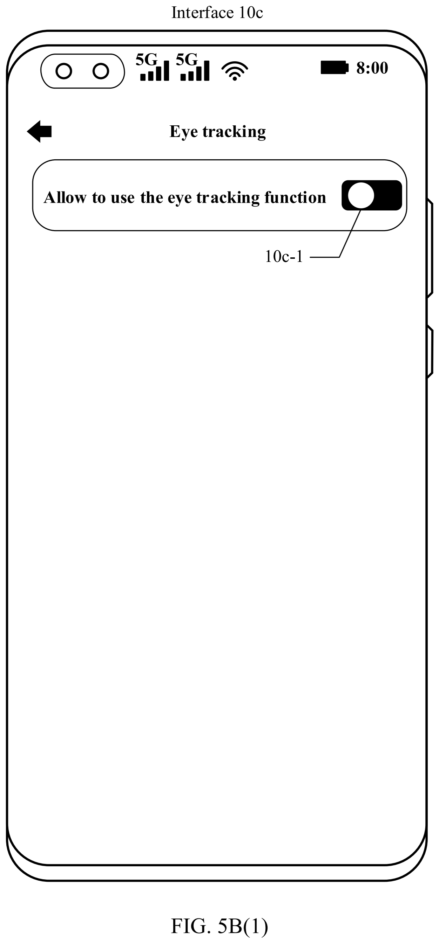

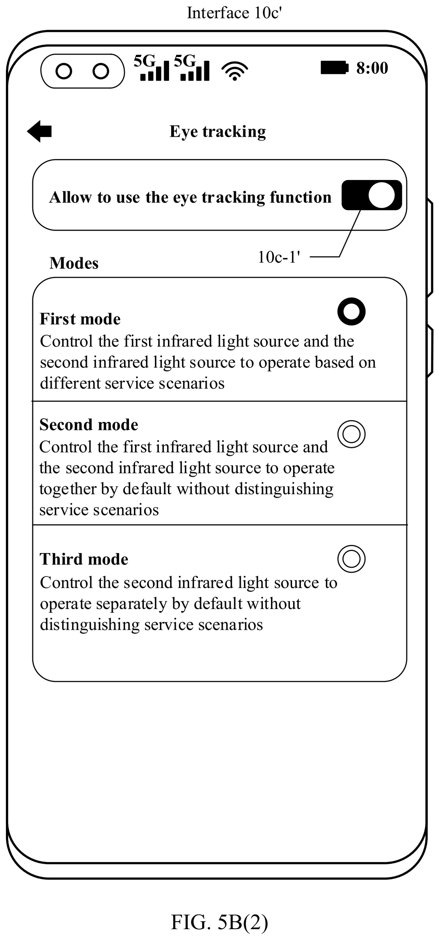

For example, in some possible implementations, an eye tracking option, for example, an option 10b-1 as shown in FIG. 5B(2), may be directly provided in the interface 10b. In some other possible implementations, an eye tracking option may alternatively be provided in an interface corresponding to another function option in the interface 10b, for example, in a smart assistant.

It should be understood that the foregoing description is merely an example listed to better understand the technical solution of this embodiment, and is not used as a unique limitation on this embodiment.

For ease of description, in this embodiment, the eye tracking option 10b-1 directly displayed in the interface 10b is used as an example. For example, after the user taps the eye tracking option 10b-1, the mobile phone 100 loads, in response to the operation behavior, an interface in which the eye tracking function is enabled, and the user interface switches from the interface 10b to an interface 10c shown in FIG. 5B(1).

Referring to FIG. 5B(1), for example, by default, the eye tracking function may be in a disabled state. In this case, a control for controlling the eye tracking function to be enabled may be in a style of a control 10c-1 shown in FIG. 5B(1).

For example, after the user taps the control 10c-1, the mobile phone 100 enables the eye tracking function in response to the operation behavior. In this case, the control 10c-1 is switched to a style of a control 10c-1' in an interface 10c' shown in FIG. 5B(2).

It may be learned from the foregoing description that the second infrared light source in the camera module may operate separately. In this case, precision of an obtained eye tracking result is low, but hardware power consumption is low. When the additionally added first infrared light source cooperates with the second infrared light source in the camera module to operate, precision of the obtained eye tracking result is high, but hardware power consumption is also high. Therefore, to better meet a use requirement of the user, after the eye tracking function is enabled, the interface 10c' further displays modes for the user to select.

Still referring to FIG. 5B(2), for example, eye tracking modes for the user to select may include a first mode, a second mode, and a third mode.

After the user selects the first mode, the mobile phone 100 can automatically and properly control, based on a current service scenario, the first mode in which the first infrared light source and the second infrared light source operate. For example, when the mobile phone 100 is currently located in a first service scenario (a high-precision eye tracking scenario), the first infrared light source and the second infrared light source are controlled to operate cooperatively. When the mobile phone 100 is currently located in a second service scenario (a low-precision eye tracking scenario), only the second infrared light source is controlled to operate.

After the user selects the second mode, the mobile phone 100 does not distinguish the current service scenario, that is, regardless of a high-precision eye tracking scenario or a low-precision eye tracking scenario, both the first infrared light source and the second infrared light source are controlled to operate cooperatively.

After the user selects the third mode, the mobile phone 100 does not distinguish the current service scenario, that is, regardless of a high-precision eye tracking scenario or a low-precision eye tracking scenario, only the second infrared light source is controlled to operate separately.

Specifically, in the technical solution provided in embodiments of this application, the eye tracking mode selected by the user being the first mode is used as an example.

In addition, it should be noted that, in some possible implementations, it may be set that after the eye tracking function is enabled, the eye tracking mode selected by default is the first mode.

It should be understood that the foregoing description is merely an example listed to better understand the technical solution of this embodiment, and is not used as a unique limitation on this embodiment.

For example, in some other possible implementations, the enabling entry of the eye tracking function may be disposed, for example, in a drop-down notification bar.

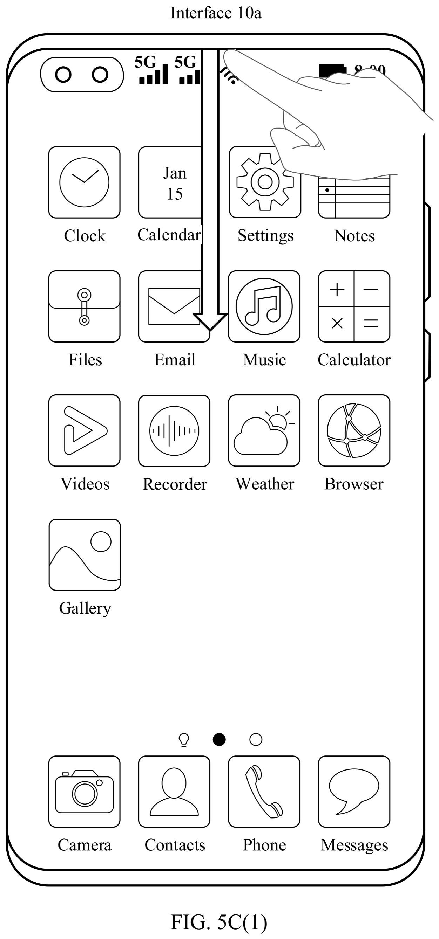

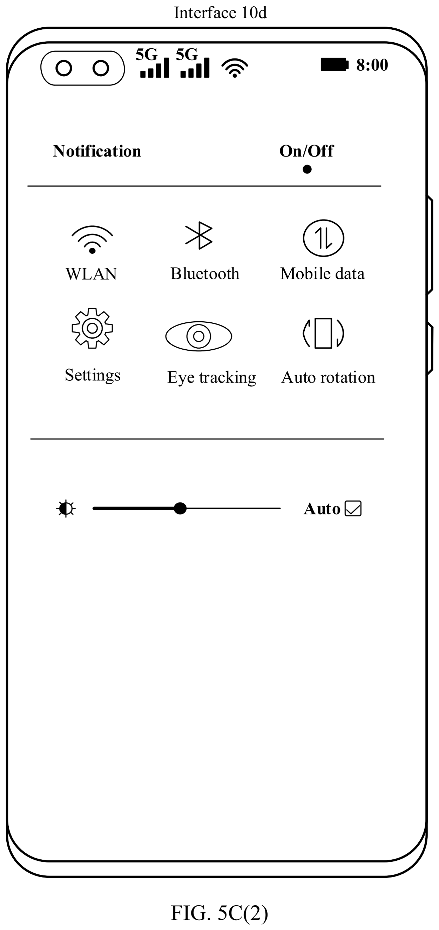

For example, in a manner in which the eye tracking function is enabled by using the drop-down notification bar, the user may make a sliding gesture on the screen along an arrow direction in an interface 10a shown in FIG. 5C(1), so that the mobile phone 100 invokes the drop-down notification bar in response to the operation behavior, and further switches the user interface from the interface 10a to an interface 10d shown in FIG. 5C(2).

Referring to FIG. 5C(2), for example, after the user taps an eye tracking function option shown in the interface 10d, the mobile phone 100 enables the eye tracking function in response to the operation behavior, and selects the default eye tracking mode, such as the first mode, or which may be an eye tracking mode previously selected by the user.

For example, in some other possible implementations, after the user taps the eye tracking function option shown in the interface 10d, the mobile phone 100 may jump to the interface 10c shown in FIG. 5B(1) in response to the operation behavior. Further, the eye tracking function is enabled by using the control 10c-1 shown in the interface 10c, and the eye tracking mode displayed in the interface 10c' shown in FIG. 5B(2) is autonomously selected.

It should be understood that the foregoing description is merely an example listed to better understand the technical solution of this embodiment, and is not used as a unique limitation on this embodiment.

The application framework layer provides an application programming interface (application programming interface, API) and a programming framework for the applications at the application layer. In some implementations, these programming interfaces and programming frameworks may be described as functions. As shown in FIG. 4, the application framework layer may include functions such as a camera service, an eye tracking service, a window manager, a content provider, a resource manager, and a notification manager, which are not listed one by one herein. This is not limited in this application.

The Android Runtime includes a kernel library and a virtual machine. The Android Runtime is responsible for scheduling and management of the Android system.

The kernel library includes two parts: one part is a functional function that needs to be invoked by a java language, and the other part is a kernel library of Android.

The application layer and the application framework layer run on the virtual machine. The virtual machine executes java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), media libraries (Media Libraries), a three-dimensional (3D) graphics processing library (for example, OpenGL ES), and a two-dimensional (2D) graphics engine (for example, SGL).

The HAL layer is configured to package a hardware driver, and further provide a same interface for an upper-layer framework. Referring to FIG. 4, for example, the HAL layer may include a camera hardware abstraction layer, an audio hardware abstraction layer, and the like, which are not listed one by one herein. This is not limited in this application.

The kernel layer is a layer between hardware and software, and includes various hardware drivers, such as a sensor driver, a display driver, a microphone driver, a WLAN driver, and a camera driver.

Based on the software structure and the hardware layer shown in FIG. 4, in the technical solution provided in embodiments of this application, the camera service may be configured to enable the eye tracking function on the mobile phone 100, and when the mobile phone is currently in the eye tracking scenario, notify, based on the service scenario, the camera hardware abstraction layer in the HAL layer to trigger the camera driver of the kernel layer, so that the camera driver drives the camera in the hardware layer, for example, the second infrared light source in the TOF module or the structured light module, to emit illumination separately, or drives the additionally added first infrared light source and a second yellow light source in the camera module to emit illumination cooperatively, so as to obtain the infrared image of the target object, so that the eye tracking service analyzes and processes the infrared image based on the integrated PCCR method or the appearance-based AI method, so as to implement eye tracking.

Introduction to the software structure of the mobile phone 100 ends here. It may be understood that the layers in the software structure shown in FIG. 4 and components included in each layer do not constitute a specific limitation on the mobile phone 100. In some other embodiments of this application, the mobile phone 100 may include more or fewer layers than those shown in the figure, and each layer may include more or fewer components. This is not limited in this application.

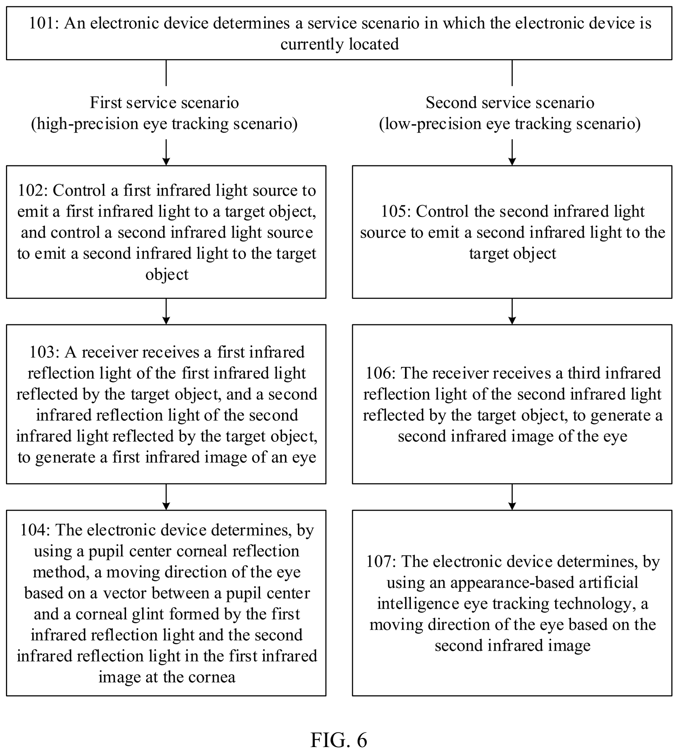

To better understand the eye tracking method provided in embodiments of this application, in this application, for example, when the user enables the eye tracking function, the selected eye tracking mode is the first mode described in the foregoing embodiment. When the eye tracking method is applied to the electronic device of the hardware structure shown in FIG. 2 and the software structure shown in FIG. 3, a processing procedure of the eye tracking method may be shown in FIG. 6.

FIG. 6 is an example schematic flowchart of an eye tracking method. In this embodiment, the eye tracking method may include:

101: An electronic device determines a service scenario in which the electronic device is currently located.

The electronic device is a device, for example, having a camera module with a built-in infrared light source, and newly added with at least one infrared light source. In actual application, the electronic device may be a mobile phone, a tablet computer, a PC, a smart screen, or the like, which is not listed one by one herein. This is not limited in this application.

It should be noted that, to minimize hardware power consumption of the electronic device, a triggering condition of step 101 may be set in actual application. Specifically, after the eye tracking function is enabled by the user in the manners shown in FIG. 5A(1), FIG. 5A(2), FIG. 5B(1), and FIG. 5B(2) or in the manner shown in FIG. 5C(1) and FIG. 5C(2), in a possible implementation, it may be set that when the screen of the electronic device is in a screen-on state, step 101 is triggered to be performed.

For example, in another possible implementation, it may be set that when the electronic device receives a notification message, for example, a received message pops up in a message management window, step 101 is triggered to be performed.

It should be understood that the foregoing description is merely an example listed to better understand the technical solution of this embodiment, and is not used as a unique limitation on this embodiment.

For example, for a manner in which the electronic device determines the service scenario in which the electronic device is currently located in step 101, in a possible implementation, for example, a user interface displayed on the current screen may be obtained, and then image recognition is performed on content of the user interface, so as to determine the service scenario in which the electronic device is currently located.

For example, in another possible implementation, for example, application identifier information of an application that is currently running in a foreground may be obtained, and the service scenario in which the electronic device is currently located is further determined based on an attribute of the application that is currently running in the foreground.

Specifically, in embodiments of this application, the service scenario in which the electronic device is located may be divided into a first service scenario (a high-precision eye tracking scenario) and a second service scenario (a low-precision eye tracking scenario).

The first service scenario is a scenario in which a requirement on precision of eye tracking is high, but power consumption limitation is not high (an eye tracking function does not need to be used for a long time), for example, an eye tracking scenario such as determining a gazed application icon and eye tracking focusing. In this scenario, an infrared camera needs to cooperate with a plurality of infrared light sources to collect infrared image, and then implement eye tracking based on the PCCR method.

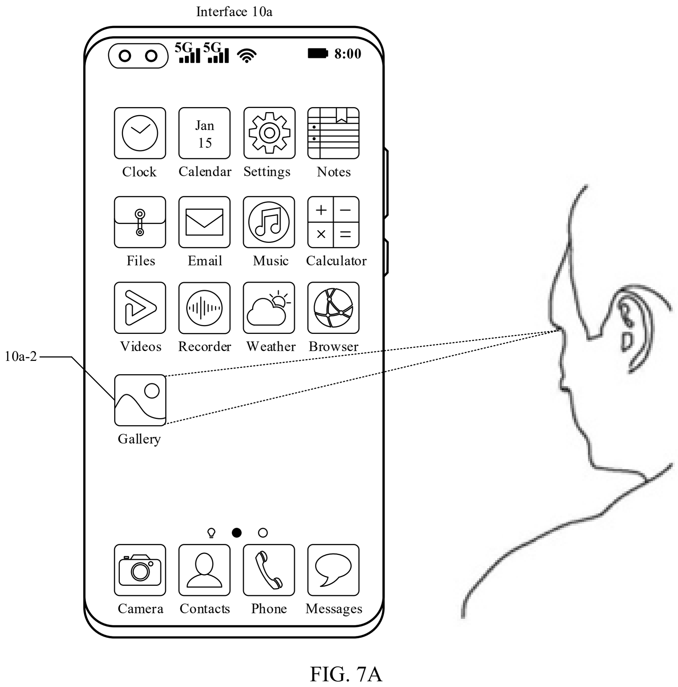

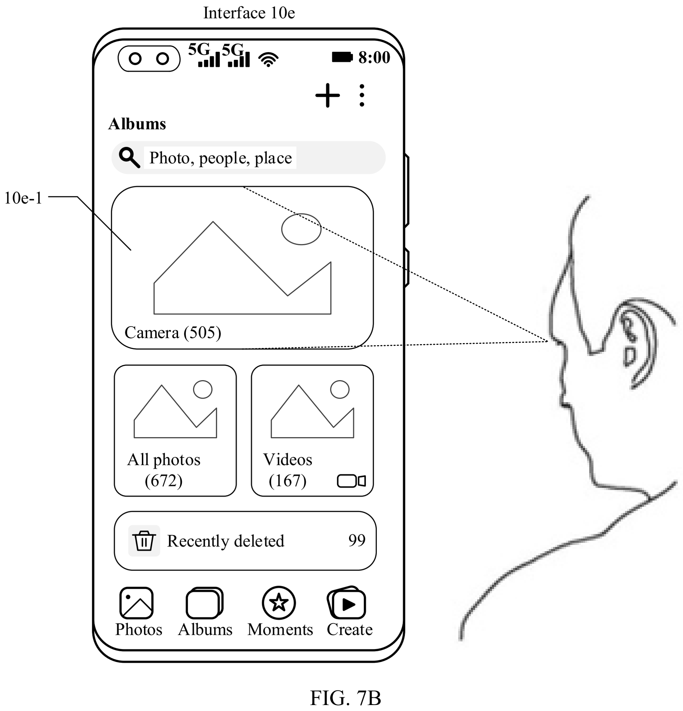

For example, the first service scenario, for example, is a scenario in which the user gazes an icon 10a-2 of a gallery application in an interface 10a in FIG. 7A, and expects to open the gallery application. In this scenario, by performing eye tracking based on the PCCR method, it may be accurately determined that the icon 10a-2 is gazed by the user, and then, in response to the eye tracking result, the gallery application is started, so that the user interface switches from the interface 10a to an interface 10e shown in FIG. 7B.

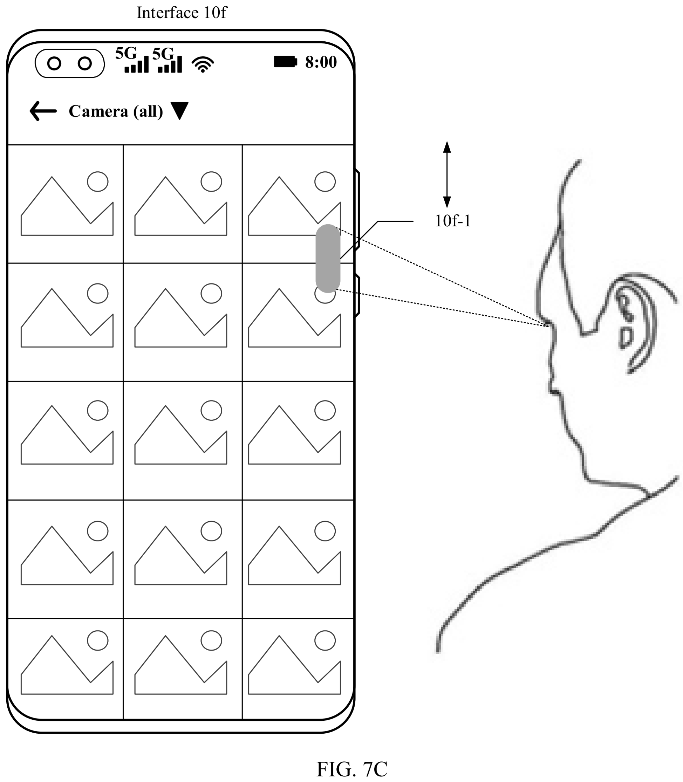

For example, the first service scenario, for another example, is a scenario in which the user gazes an option 10e-1 in the interface 10e in FIG. 7B, and expects to open an interface for displaying all photos taken by the camera, such as an interface 10f in FIG. 7C. In this scenario, by performing eye tracking based on the PCCR method, it may be accurately determined that the option 10e-1 is gazed by the user, and then, in response to the eye tracking result, an interface of a photo taken by the camera is loaded, so that the user interface switches from the interface 10e to the interface 10f shown in FIG. 7C.

It should be understood that the foregoing description is merely an example listed to better understand the technical solution of this embodiment, and is not used as a unique limitation on this embodiment.

The second service scenario is a scenario in which a requirement on precision of eye tracking is low, but power consumption limitation is high (an eye tracking function needs to be used for a long time), for example, an eye tracking scenario such as eye-controlled page-turning/sliding when reading e-books and watching short videos. In this scenario, no additional infrared light source needs to be used, and only the infrared light source built in the emitter in the camera module is used to emit illumination. Subsequently, based on an appearance-based AI method, the infrared image is analyzed and processed, so that eye tracking can be implemented.

For example, the second service scenario, for example, is a scenario in which the user gazes a sliding control 10f-1 in the interface 10f in FIG. 7C, and expects to slide a photo displayed in the interface 10f. In this scenario, based on the appearance-based AI method, in a case that hardware power consumption is not increased, eye tracking can be implemented, so that the user controls the sliding control 10f-1 to slide up or down along an arrow by using the eye, to slide another photo displayed in the interface 10f.

It should be understood that the foregoing description is merely an example listed to better understand the technical solution of this embodiment, and is not used as a unique limitation on this embodiment.

102: Control a first infrared light source to emit a first infrared light to a target object, and control a second infrared light source to emit a second infrared light to the target object.

Specifically, in a case that it is determined that a service scenario in which the electronic device is currently located is a first service scenario, to ensure user experience and quickly and accurately complete a human-computer interaction action expected by the user, the PCCR method with high eye-tracking precision effect may be used, to implement eye tracking.

It may be learned from the description in the foregoing embodiment that the PCCR method requires a collected infrared image to be generated based on at least two infrared light sources irradiating the target object, such as an infrared reflection light of an eye of the user. Therefore, in a case that the electronic device is located in the first service scenario, the first infrared light source may be controlled to emit the first infrared light to the target object, and the second infrared light source may be controlled to emit the second infrared light to the target object.

It should be noted that in the first service scenario, the first infrared light source and the second infrared light source may be controlled to operate simultaneously (emit the infrared lights) in a hard synchronization manner. In this manner, for example, both the first infrared light source and the second infrared light source may be connected to different pins of a same drive control unit, and further, the pins that are of the drive control unit and that are connected to the two infrared light sources are controlled to simultaneously transmit a same drive signal, so as to drive the first infrared light source and the second infrared light source to simultaneously operate.

For example, in another possible implementation, the first infrared light source and the second infrared light source may be controlled to operate simultaneously (emit the infrared lights) in a soft synchronization manner. In this manner, for example, in a same processing period, instructions may be simultaneously sent to the first infrared light source and the second infrared light source, so as to drive the first infrared light source and the second infrared light source to operate simultaneously.

It should be understood that the foregoing description is merely an example listed to better understand the technical solution of this embodiment, and is not used as a unique limitation on this embodiment.

In addition, it should be further noted that, for a user wearing glasses, infrared lights emitted by infrared light sources at different positions may cause that a position of corneal reflection is affected by reflection of a lens, and an area is highlighted. Therefore, in the first service scenario, the first infrared light source and the second infrared light source may operate alternately. By alternately driving the first infrared light source and the second infrared light source to operate, one image including complete information may be obtained by processing two images.

In addition, it should be further noted that, to not affect the user experience, an alternating period may be set to a time interval that the user cannot perceive, that is, for the user, the first infrared light source and the second infrared light source always emit infrared lights. In this way, it can be ensured that not only the infrared image of the eye of the user wearing the glasses can include complete information, but also hardware power consumption of the electronic device can be reduced by means of alternating operation.

103: A receiver receives a first infrared reflection light of the first infrared light reflected by the target object, and a second infrared reflection light of the second infrared light reflected by the target object, to generate a first infrared image of an eye.

The first infrared reflection light received by the receiver is specifically an infrared reflection light of the first infrared light reflected by a cornea and a retina of the eye. The second infrared reflection light received by the receiver is specifically an infrared reflection light of the second infrared light reflected by the cornea and the retina.

It may be understood that the receiver is essentially an image sensor. Therefore, the receiver may generate the first infrared image based on the first infrared reflection light and the second infrared reflection light.

104: The electronic device determines, by using a pupil center corneal reflection method, a moving direction of the eye based on a vector between a center of a pupil and a corneal glint formed by the first infrared reflection light and the second infrared reflection light in the first infrared image at the cornea.

It may be understood that a basic principle of implementing eye tracking by using the PCCR method is implemented based on reflection generated by the cornea when the infrared light source irradiates the eye. Specifically, if the infrared light source and an image collection device are fixed, a pupil position may change when the eye rotates, but a position of the corneal glint formed by different infrared lights reflected on the cornea, such as the first infrared reflection light and the second infrared reflection light in this embodiment, does not change. Therefore, the position of the corneal glint may be used as a reference point of pupil movement, and movement of the eye is estimated based on a change of relative positions of the pupil center and the corneal glint (a corneal reflection point). Therefore, the electronic device may determine, by using the pupil center corneal reflection method, the moving direction of the eye based on the vector between the pupil center and the corneal glint formed by the first infrared reflection light and the second infrared reflection light in the first infrared image at the cornea, so as to implement eye tracking.

In addition, it should be further understood that, in actual application, estimation of a gazing direction may be implemented, for example, by using a mapping model (such as a nonlinear polynomial model) or a geometric model.

For detailed processing details of eye tracking based on the PCCR method, refer to related documents of the PCCR method. Details are not described herein.

In addition, it should be further noted that, in addition to providing the infrared image, generally the camera module that itself has the second infrared light source may further provide 3D depth information. Therefore, in some possible implementations, the electronic device may first correct a head posture of the user based on the 3D depth information provided by the camera module. Then, the electronic device determines, by using the pupil center corneal reflection method again, the moving direction of the eye based on the vector between the pupil center and the corneal glint formed by the first infrared reflection light and the second infrared reflection light in the first infrared image at the cornea. In this way, the 3D depth information provided by the camera module is fused, so that generalization of a pose can be improved, and an eye tracking result of the infrared image corrected based on the 3D depth information is more accurate.

Therefore, for an electronic device having a camera module that itself has one infrared light source, one or more additional infrared light sources (first infrared light source) are added. After the eye tracking function is enabled on the electronic device of this structure, the service scenario in which the electronic device is currently located is determined, so as to control both the infrared light source built in the camera module and the newly-added infrared light source to emit infrared lights to the target object in a case that the electronic device is in a high-precision eye tracking scenario, and the receiver receives the infrared reflection light reflected by the target object to generate the first infrared image of the eye, so that the electronic device can analyze and process the first infrared image based on PCCR, so as to implement eye tracking. Because the camera module itself has one infrared light source, high-precision eye tracking can be implemented by only adding at least one additional infrared light source. Therefore, precision of eye tracking is ensured, and a quantity of screen holes of the electronic device can be reduced.

105: Control the second infrared light source to emit a second infrared light to the target object.

Specifically, in a case that it is determined that the service scenario in which the electronic device is currently located is a second service scenario, to reduce hardware power consumption of the electronic device, the appearance-based AI method may be used, and then eye tracking is performed.

It may be learned from the description in the foregoing embodiment that the appearance-based AI method does not require a collected infrared image to be generated based on at least two infrared light sources irradiating the target object, such as the infrared reflection light of the eye of the user. Therefore, in a case that the electronic device is in the second service scenario, to reduce hardware power consumption, only the second infrared light source may be controlled to operate, that is, emit the second infrared light to the target object.

106: The receiver receives a third infrared reflection light of the second infrared light reflected by the target object, to generate a second infrared image of the eye.

Specifically, in the second service scenario, because only the second infrared light source operates separately, the infrared light emitted by the second infrared light source is flood light. Therefore, the collected second infrared image is an image that includes the face of the user. Generation of the second infrared image is specifically that the receiver receives the third infrared reflection light of the second infrared light reflected by the face of the user, and further generates the second infrared image based on the third infrared reflection light.

107: The electronic device determines, by using an appearance-based artificial intelligence eye tracking technology, a moving direction of the eye based on the second infrared image.

Understandably, it may be learned from a basic principle of implementing eye tracking in the appearance-based AI method that the appearance-based AI method uses a coupling relationship between a key point of an eye area such as the pupil center, an appearance of an eye image and a face image, and a position of a gaze point to perform eye tracking by using a large quantity of data training.

Therefore, when step 107 is implemented, the electronic device may first determine a key point of an area in which the eye in the second infrared image is located. Then, an image area including key information is captured from the second infrared image to obtain an infrared image of the eye. Finally, by using the appearance-based AI method, the moving direction of the eye can be determined based on the appearance of the face and the eye of the user in the second infrared image and the position of the gaze point in the infrared image of the eye, so as to implement eye tracking.

For detailed processing details of implementing eye tracking based on the appearance-based AI method, refer to related documents of the appearance-based AI method. Details are not described herein.

Therefore, in the low-precision eye tracking scenario, no additional first infrared light source needs to be used, only the second infrared light source built in the emitter in the camera module is used to emit illumination, and then the obtained infrared image is analyzed and processed based on an appearance-based AI eye tracking technology, so that eye tracking can be implemented, and hardware power consumption of the electronic device can be ensured.

In addition, it should be further noted that, in actual application, a resolution of the infrared image may be flexibly configured based on requirements of eye tracking precision and hardware power consumption in different service scenarios. It may be understood that a higher resolution causes higher precision and higher power consumption. Conversely, when the resolution of the infrared image is reduced, hardware power consumption may be reduced, but precision of eye tracking also decreases accordingly.

According to the eye tracking method provided in embodiments of this application, for the electronic device having a camera module that itself has a built-in infrared light source (the second infrared light source in the foregoing embodiment), at least one additional infrared light source (the first infrared light source in the foregoing embodiment) is added, so that the electronic device can properly control the first infrared light source and the second infrared light source to operate separately or cooperatively based on an actual service scenario. Therefore, different eye tracking methods are selected to implement layered and hierarchical eye tracking processing, which can not only meet a high-precision eye tracking requirement of the user, but also meet a low-power-consumption requirement of the user for the electronic device, thereby better meeting different usage requirements of the user, and improving user experience.

In addition, it may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. A person skilled in the art may use different methods to implement the described functions with reference to embodiments for each particular application, but it should not be considered that the implementation goes beyond the scope of this application.

In addition, it should be noted that, in an actual application scenario, the eye tracking method that is provided in the foregoing embodiments and that is implemented by an electronic device may be alternatively performed by a chip system included in the electronic device. The chip system may include a processor. The chip system may be coupled to a memory, so that when the chip system runs, a computer program stored in the memory is invoked to implement the foregoing steps performed by the electronic device. The processor in the chip system may be an application processor or may be a processor that is not an application processor.

In addition, an embodiment of this application further provides a computer-readable storage medium. The computer storage medium stores computer instructions. When the computer instructions are run on an electronic device, the electronic device is enabled to perform the foregoing related method steps to implement the eye tracking method in the foregoing embodiments.

In addition, an embodiment of this application further provides a computer program product. When the computer program product is run on an electronic device, the electronic device is enabled to perform the foregoing related steps to implement the eye tracking method in the foregoing embodiments.

In addition, an embodiment of this application further provides a chip (which may alternatively be a component or a module). The chip may include one or more processing circuits and one or more transceiver pins. The transceiver pin and the processing circuit communicate with each other by using an internal connection path. The processing circuit performs the foregoing related method steps to implement the eye tracking method in the foregoing embodiments, to control a receive pin to receive a signal and control a transmit pin to send a signal.

In addition, it can be learned from the foregoing description that, all of the electronic device, the computer-readable storage medium, the computer program product, or the chip provided in the embodiments of this application are configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. An eye tracking method, applied to an electronic device, wherein the electronic device comprises a first infrared light source and a camera module, the camera module comprises an emitter and a receiver, and the emitter comprises a second infrared light source, wherein
the method comprises:
determining, by the electronic device, a service scenario in which the electronic device is currently located;
controlling, in a case that the electronic device is in a first service scenario, the first infrared light source to emit a first infrared light to a target object, and controlling the second infrared light source to emit a second infrared light to the target object, wherein the target object comprises an eye of a user, and the first service scenario is a high-precision eye tracking scenario;
receiving, by the receiver, a first infrared reflection light of the first infrared light reflected by the target object, and a second infrared reflection light of the second infrared light reflected by the target object, to generate a first infrared image of the eye; and
performing, by the electronic device, eye tracking based on the first infrared image.

2. The method according to claim 1, wherein the receiving, by the receiver, a first infrared reflection light of the first infrared light reflected by the target object, and a second infrared reflection light of the second infrared light reflected by the target object, to generate a first infrared image of the eye comprises:
receiving, by the receiver, the first infrared reflection light of the first infrared light reflected by a cornea and a retina of the eye, and the second infrared reflection light of the second infrared light reflected by the cornea and the retina; wherein the cornea reflects the first infrared reflection light and the second infrared reflection light, and a position of a formed corneal glint remains constant, and the light reflected on the retina identifies a pupil orientation of the eye; and
generating the first infrared image of the eye based on the first infrared reflection light and the second infrared reflection light.

3. The method according to claim 2, wherein the performing, by the electronic device, eye tracking based on the first infrared image comprises:
determining, by the electronic device by using a pupil center corneal reflection method, a moving direction of the eye based on a vector between a pupil center and the corneal glint formed by the first infrared reflection light and the second infrared reflection light in the first infrared image at the cornea.

4. The method according to claim 3, wherein the determining, by the electronic device by using a pupil center corneal reflection method, a moving direction of the eye based on a vector between a pupil center and the corneal glint formed by the first infrared reflection light and the second infrared reflection light in the first infrared image at the cornea comprises:
correcting, by the electronic device, a head posture of the user based on 3D depth information provided by the camera module; and
determining, by the electronic device by using the pupil center corneal reflection method, the moving direction of the eye based on the vector between the pupil center and the corneal glint formed by the first infrared reflection light and the second infrared reflection light in the first infrared image at the cornea.

5. The method according to claim 1, wherein the method further comprises:
controlling, in a case that the electronic device is in a second service scenario, the second infrared light source to emit the second infrared light to the target object, wherein the second service scenario is a low-precision eye tracking scenario;
receiving, by the receiver, a third infrared reflection light of the second infrared light reflected by the target object, to generate a second infrared image of the eye; and
performing, by the electronic device, eye tracking based on the second infrared image.

6. The method according to claim 5, wherein the receiving, by the receiver, a third infrared reflection light of the second infrared light reflected by the target object, to generate a second infrared image of the eye comprises:
receiving, by the receiver, a third infrared reflection light of the second infrared light reflected by a face of the user; and
generating the second infrared image based on the third infrared reflection light.

7. The method according to claim 6, wherein the performing, by the electronic device, eye tracking based on the second infrared image comprises:
determining, by the electronic device, a key point of an area in which the eye is located in the second infrared image;
capturing, by the electronic device, an image area comprising the key from the second infrared image, to obtain an infrared image of the eye; and
determining, by the electronic device by using an appearance-based artificial intelligence eye tracking technology, a moving direction of the eye based on an appearance of the face and the eye of the user in the second infrared image and a position of a gaze point of the eye in the infrared image of the eye.

8. The method according to any one of claims 1 to 7, wherein the first infrared light source and the camera module are disposed below a screen of the electronic device; and
the controlling, in a case that the electronic device is in a first service scenario, the first infrared light source to emit a first infrared light to a target object, and controlling the second infrared light source to emit a second infrared light to the target object comprises:
controlling, in the case that the electronic device is in the first service scenario, the first infrared light source to emit the first infrared light to the target object at a first intensity, and controlling the second infrared light source to emit the second infrared light to the target object at the first intensity; wherein
the first intensity is higher than a second intensity, and the second intensity is a luminous intensity of the first infrared light source and the second infrared light source when the first infrared light source and the camera module are disposed in a through hole provided in the screen.

9. The method according to any one of claims 1 to 7, wherein a through hole is provided in a screen of the electronic device, and the first infrared light source and the camera module are disposed in the through hole; and
the controlling, in a case that the electronic device is in a first service scenario, the first infrared light source to emit a first infrared light to a target object, and controlling the second infrared light source to emit a second infrared light to the target object comprises:
controlling, in the case that the electronic device is in the first service scenario, the first infrared light source to emit the first infrared light to the target object at a second intensity, and controlling the second infrared light source to emit the second infrared light to the target object at the second intensity; wherein
the second intensity is lower than a first intensity, and the first intensity is a luminous intensity of the first infrared light source and the second infrared light source when the first infrared light source and the camera module are disposed below the screen.

10. The method according to any one of claims 1 to 7, wherein there is at least one first infrared light source.

11. The method according to claim 10, wherein a spacing between each first infrared light source and the second infrared light source is greater than or equal to 1 cm, and a distance between any two first infrared light sources is greater than or equal to 1 cm.

12. An electronic device, wherein the electronic device comprises a memory, a processor, a first infrared light source, and a camera module, the camera module comprises an emitter and a receiver, and the emitter comprises a second infrared light source;
the processor is separately coupled to the memory, the first infrared light source, and the camera module; and
the memory stores program instructions, and when the program instructions are executed by the processor, the electronic device is enabled to perform the eye tracking method according to any one of claims 1 to 11.

13. A computer-readable storage medium, comprising a computer program, wherein when the computer program is run on an electronic device, the electronic device is enabled to perform the eye tracking method according to any one of claims 1 to 11.
